# EUROPÄISCHE PATENTSCHRIFT

(11) **EP 2 804 741 B1**
(45) Veröffentlichungstag und Bekanntmachung des Hinweises auf die Patenterteilung: **09.10.2019**
(21) Anmeldenummer: 13700884.3
(22) Anmeldetag: 17.01.2013
(51) Int. Cl.: B29C 65/00, B29C 65/02

(54) **VERFAHREN ZUM HERSTELLEN EINES TEILWEISE TRANSPARENTEN KÖRPERS MIT EINEM FARBVERLAUF SOWIE EINEN TEILWEISE TRANSPARENTEN KÖRPER MIT EINEM FARBVERLAUF**
METHOD FOR PRODUCING A PARTLY TRANSPARENT BODY WITH A COLOR GRADIENT, AND A PARTLY TRANSPARENT BODY WITH A COLOR GRADIENT
PROCÉDÉ DE FABRICATION D'UN CORPS PARTIELLEMENT TRANSPARENT PRÉSENTANT UN DÉGRADÉ DE COULEUR ET CORPS PARTIELLEMENT TRANSPARENT PRÉSENTANT UN DÉGRADÉ DE COULEUR

(30) Priorität: 18.01.2012 DE 102012000851
(43) Veröffentlichungstag der Anmeldung: 26.11.2014
(73) Patentinhaber: Montblanc-Simplo GmbH, 22525 Hamburg (DE)
(72) Erfinder: MARTENS, Manfred, 21109 Hamburg (DE); PODSZUWEIT, Dietmar, 22455 Hamburg (DE)
(74) Vertreter: LKGLOBAL Lorenz & Kopf PartG mbB Patentanwälte
(86) Internationale Anmeldenummer: PCT/EP2013/050778
(87) Internationale Veröffentlichungsnummer: WO 2013/107788

(56) Entgegenhaltungen:
- WO-A1-03/082042
- FR-A1- 2 306 650
- US-A- 2 350 421
- US-A- 2 985 556
- US-A- 4 142 383
- US-A- 4 767 647
- US-A1- 2005 019 088
- US-A1- 2009 249 608
- US-A1- 2011 056 243

## Beschreibung

### TECHNISCHES GEBIET

Die vorliegende Erfindung betrifft ein Verfahren zum Herstellen eines teilweise transparenten Körpers mit einem Farbverlauf sowie einen teilweise transparenten Körper mit einem Farbverlauf.

### HINTERGRUND DER ERFINDUNG

Im Luxusgüterbereich werden zur optischen Verschönerung von Edelsteinen häufig optische Effekte, wie beispielsweise ein Lupeneffekt bzw. Vergrößerungs- oder Verkleinerungseffekte angewendet. Das Grundprinzip dabei besteht darin, einen Gegenstand in einen transparenten Körper bzw. in eine Hüllform, einzufügen und zu positionieren und anschließend durch formgebende Bearbeitung, wie beispielsweise Drehen und/oder Polieren der transparenten Hüllform optische Effekte zu verleihen.

Aus der EP 1 945 440 B1 ist ein Verfahren zum Einschließen eines Gegenstands in eine mehrteilige und transparente Hüllform bekannt, bei dem eine erste transparente Hüllform mit einer ersten Fügefläche und eine zweite transparente Hüllform mit einer zweiten Fügefläche bereitgestellt werden, der einzuschließende Gegenstand zwischen die entsprechend ausgefüllten Hüllformen eingebracht wird und die Hüllformen anschließend miteinander verschmolzen bzw. verklebt werden.

Es ist weiterhin bekannt, zur Erreichung einer besonders ansprechenden Optik Farb- oder Schattierungsverläufe an transparenten Körpern vorzusehen, was häufig durch einen Tauchvorgang des transparenten Körpers in eine chemisch aktive Flüssigkeit erfolgt, wobei die resultierende Schattierung bzw. der Schattierungsverlauf von der jeweiligen Eintauchzeit abhängig ist. Dieses Verfahren wird beispielsweise bei Sonnenbrillen mit einem Schattierungsverlauf angewandt.

US 2005/019088 A1 zeigt ein Schreibinstrument mit einem transparenten Teil, einer darin befindlichen Flüssigkeit mit darin bewegbar angeordneten Partikeln.

US 4 142 383 A offenbart einen Körper aus Glas mit einer darin eingeschlossenen Flüssigkeit und Partikeln.

FR 2 306 650 A1 zeigt ein Verfahren zum Herstellen von Schmuckartikeln mit eingeschlossenen Gegenständen.

US 2009/0249608 zeigt das Einschließen eines Objekts zwischen zwei Hüllformabschnitten.

US 2 350 421 zeigt ein Herstellverfahren zum Herstellen preisgünstiger Schmucksteine aus einem Kunststoff, wobei ein linsenförmiges transparentes Bauteil mit einer nicht-transparenten Rückseite und dazwischenliegenden, mosaikartig angeordneten Metallpartikeln durch Verschmelzen verbunden wird

US 2 985 556 zeigt das Herstellen eines Werkstücks mit einem Farbverlauf durch die Kombination zweier Materialabschnitte, wobei ein Materialabschnitt in einer Vertiefung des anderen Materialabschnitts liegt.

US 4 767 647 offenbart die Verwendung einer Folierung zum Herstellen eines eingeschlossenen Reliefs.

### ZUSAMMENFASSUNG DER ERFINDUNG

Es ist eine Aufgabe der Erfindung, ein Verfahren zum Herstellen eines teilweise transparenten Körpers mit einem eingeschlossenen Gegenstand vorzuschlagen, bei dem gleichzeitig ein Schattierungsverlauf erreicht werden kann.

Die Aufgabe wird gelöst durch ein Verfahren mit den Merkmalen des unabhängigen Anspruchs 1. Vorteilhafte Ausführungsformen und Weiterbildungen sind den Unteransprüchen zu entnehmen.

In einer vorteilhaften Ausführungsform werden eine erste transparente Hüllform mit einem eingeschlossenen Gegenstand und einer ersten Fügefläche und eine zweite nicht vollständig transparente Hüllform mit einer zweiten Fügefläche bereitgestellt. Die Fügefläche der zweiten Hüllform ist in Form einer Innenseite einer Ausnehmung ausgeführt, während die Fügefläche der ersten Hüllform als Außenfläche eines Vorsprungs ausgeführt wird, wobei die Form des Vorsprungs mit der Form der Ausnehmung korrespondiert. Die erste Fügefläche wird auf die zweite Fügefläche gebracht und anschließend werden die erste Fügefläche der ersten Hüllform mit der zweiten Fügefläche der zweiten Hüllform verschmolzen, indem die erste Fügefläche und die zweite Fügefläche mit einer Druckkraft und einer Temperatur beaufschlagt werden, so dass die erste Hüllform an der ersten Fügefläche in die zweite Hüllform an der zweiten Fügefläche frei von einer sichtbaren Fügenaht übergeht.

Durch die unterschiedlichen Transparenzgrade und das Verschmelzen der ersten Hüllform in der zweiten Hüllform entsteht ein nahtloser Übergang von einer ersten Hüllform zu einer zweiten Hüllform, so dass abhängig von der gewählten Form der Ausnehmung ein optisch ansprechender Farbverlauf erreicht wird. Der Begriff des Farbverlaufs umfasst ferner auch einen Schattierungsverlauf.

In einer weiteren vorteilhaften Ausführungsform des Verfahrens wird vor oder während des Verschmelzens der Hüllformen ein Vakuum gebildet, womit Lufteinschlüsse vermieden werden können. Damit kann ein klarer Übergang bereitgestellt werden, ohne den Blick auf den eingeschlossenen Gegenstand durch beispielsweise Luftblasen zwischen der ersten und der zweiten Hüllform zu stören. Durch die Vakuumbildung lässt sich ferner die erforderliche Verpresskraft reduzieren, das es in diesem Falle nicht erforderlich ist, eingeschlossene Luftpolster zusammenzupressen. Hierdurch sinken außerdem die Spannungen in der Fügenaht, da keine unter Druck stehenden Lufteinschlüsse mehr vorhanden sind.

In einer vorteilhaften Ausführungsform des Verfahrens werden die erste Hüllform und die zweite Hüllform in einem Führungsschacht angeordnet. Der Führungsschacht weist eine genau definierte lichte Weite auf, welche auf die Abmessungen der Hüllformen abgestimmt ist, so dass ein Gebilde aus den beiden Hüllformen sehr exakt beweglich einpassbar ist.

In einer weiteren vorteilhaften Ausführungsform des Verfahrens fährt zumindest ein Stößelelement in den Führungsschacht ein, um somit mittels des Einfahrens eine Druckkraft auf die erste Hüllform und/oder die zweite Hüllform aufzubringen. Mittels des Führungsschachts und des Stößels kann somit eine definierte Druckkraft erzeugt werden, die sich entlang des Führungsschachts ausrichtet, um auf zumindest eine der beiden Hüllformen zu wirken. Eine unerwünschte schräge Kraftbeaufschlagung kann damit vermieden werden.

In einer weiteren vorteilhaften Ausführungsform der Erfindung erzeugt das Stößelelement die Druckkraft parallel zu einer Wandfläche des Führungsschachts. Eine Verschiebung oder Verkantung kann somit vermieden werden, so dass keine ungewollten Querkräfte entstehen.

In einer vorteilhaften Ausführungsform wird die Ausnehmung zu einer Bodenfläche hin verjüngend ausgestaltet, wodurch die Wandstärke der den Vorsprung der ersten Hüllform umschließenden nicht vollständig transparenten Hüllform in einer Laufrichtung von der ersten Hüllform ausgehend zunimmt. Dadurch tritt eine zunehmende Schattierung bzw. Verdunklung ein.

In einer vorteilhaften Ausführungsform weist die Innenfläche der Ausnehmung eine konstante Steigung auf. Die dadurch resultierende Trichterform ist leicht zu fertigen und kann eine zunehmende Farbschattierung zu der Bodenfläche hin herstellen.

Resultierend daraus wird in einer vorteilhaften Ausführungsform der Vorsprung als Kegelstumpf ausgeführt. Hierbei ist darauf zu achten, dass die Tiefe der Innenkontur bis zu der ebenen Bodenfläche geringer ist als die Länge des an der ersten Hüllform angeordneten Kegelstumpfs, um beim Zusammenfügen der beiden Hüllformen Lufteinschlüsse zu vermeiden. Damit wird vermieden, dass beim Einführen des Kegelstumpfs in die kegelförmige Ausnehmung eine formschlüssige Verbindung eingegangen wird, durch die Luft zwischen der Bodenfläche und dem Kegelstumpf eingeschlossen ist und beim Verschmelzen darin verbleibt. Es muss auch bei allen anderen denkbaren Formen des Vorsprungs darauf geachtet werden, dass beim Einbringen des Vorsprungs in die Ausnehmung ein Spalt verbleibt.

In einer ebenso vorteilhaften Ausführungsform kann die Ausnehmung eine sich ändernde Steigung haben. Die Ausnehmung kann dabei einer mathematischen Funktion folgen, etwa einer Parabel oder Hyperbel und könnte auch einzelnen abgestuften Funktionen erster Ordnung folgen. Die Änderung der Steigung kann dabei variabel sein, wobei jedoch auf Hinterschneidungen zu verzichten sein sollte, um Lufteinschlüsse zu vermeiden. Die Kontur der Innenfläche könnte dabei beispielsweise an die resultierende Außenkontur des Gegenstands angepasst werden, um einen linearen Farbverlauf zu erzeugen.

In einer vorteilhaften Ausführungsform ändert sich die Steigung monoton oder streng monoton in eine Richtung, so dass ein gleichmäßiger Farbverlauf erzielt wird.

In einer vorteilhaften Ausführungsform ist weiterhin die Bodenfläche der Ausnehmung eben, um einen klaren Abschluss in der Ausnehmung zu schaffen und eine gute Verbindbarkeit mit der ersten Hüllform zu erlauben.

In einer vorteilhaften Ausführungsform wird eine erste Hüllform durch einen ersten Hüllformabschnitt mit einer ersten Hüllformabschnittsfügefläche und einen zweiten Hüllformabschnitt mit einer zweiten Hüllformabschnittsfügefläche ausgebildet. Auf bzw. im Bereich der ersten Hüllformabschnittsfügefläche wird ein Gegenstand ausgerichtet. Der erste Hüllformabschnitt und der zweite Hüllformabschnitt werden anschließend zusammengeführt, so dass der Gegenstand zwischen der ersten Hüllformabschnittsfügefläche und der zweiten Hüllformabschnittsfügefläche verharrt oder auch temporär festgeklemmt wird. Im Falle, dass der Gegenstand in einer definierten Lage auf der ersten Hüllformabschnittsfügefläche ausgerichtet wird, lässt sich erreichen, dass er beim Zusammenführen des ersten Hüllformabschnitts und des zweiten Hüllformabschnitts in dieser definierten Lage verharrt. Die erste Hüllformabschnittsfügefläche des ersten Hüllformabschnitts wird dann mit der zweiten Hüllformabschnittsfügefläche des zweiten Hüllformabschnitts verschmolzen, indem die erste Hüllformabschnittsfügefläche und zweite Hüllformabschnittsfügefläche mit einer Druckkraft und einer Temperatur beaufschlagt werden, so dass der erste Hüllformabschnitt an der ersten Hüllformabschnittsfügefläche in den zweiten Hüllformabschnitt an der zweiten Hüllformabschnittsfügefläche frei von einer sichtbaren Fügenaht übergeht. Die zusätzlichen Merkmale dieser Ausführungsform werden sehr anschaulich in EP 1 945 440 B1 dargestellt. Das erfindungsgemäße Verfahren kann einen derart vorbereiteten transparenten Körper mit einem eingeschlossenen Gegenstand durch die vorangehend geschilderten Merkmale in vorteilhafter Weise weiterbilden.

Bevorzugt ist der in der ersten Hüllform eingeschlossene Gegenstand derart in der ersten Hüllform positioniert oder die zweite Hüllform wird derart dimensioniert, dass der Gegenstand vollständig von der zweiten Hüllform umschlossen wird. Durch dieses besonders vorteilhafte Verfahren kann ein herausragender optischer Effekt erzielt werden. Wird der Körper von der ersten Hüllform aus betrachtet, scheint der eingeschlossene Gegenstand in einem dunklen Nebel zu liegen, der sich zu dem eingeschlossenen Gegenstand hin lichtet und sich zu dessen Oberseite hin vollständig auflöst, von der ersten Hüllform ausgehend jedoch sich verdichtet und schließlich in einer durchgängig untransparenten Fläche endet.

In einer vorteilhaften Ausführungsform wird die zweite Hüllform vollständig untransparent gestaltet. Dadurch kann der Nebeleffekt noch weiter verstärkt werden. Beispielhaft kann die zweite Hüllform schwarz durchgefärbt sein.

In einer vorteilhaften Ausführungsform wird ein optischer Effekt mittels Bearbeitung, insbesondere mittels Drehen und/oder Polieren einer ersten Hüllfläche der ersten Hüllform und/oder einer zweiten Hüllfläche der zweiten Hüllform erreicht. Unter diesen Hüllflächen wird dabei die äußere Oberfläche bzw. Außenfläche der jeweiligen Hüllform verstanden. Durch die Herstellung gekrümmter Flächen der transparenten Hüllformen können beliebige optische Effekte erreicht werden, die für den Verbraucher sehr interessant wirken. Ein Vergrößerungseffekt kann etwa einen in der ersten Hüllform eingeschlossenen Edelstein kostbar bzw. größer erscheinen lassen. Dementsprechend sind auch Verkleinerungs- oder Verzerrungseffekte denkbar.

In einer vorteilhaften Ausführungsform wird nach dem Zusammenfügen der ersten und der zweiten Hüllform Material von der Außenfläche des Körpers abgetragen, um eine nahtlose Oberfläche herzustellen. Die resultierende Form des Körpers könnte etwa konisch sein, wobei ein Teil des Konus zur Erreichung des Farb- bzw. Schattierungsverlaufs verantwortlich ist und ein anderer Teil den eingeschlossenen Gegenstand trägt. Durch die Endbearbeitung ist keine Naht mehr erkennbar, so dass die beiden Hüllformen auch optisch eine Einheit bilden.

In einer vorteilhaften Ausführungsform des Verfahrens wird die zweite Hüllform mittels eines Spritzgussverfahrens hergestellt. Gerade bei Verwendung von Kunststoffen bzw. transparenten Kunststoffen eignet sich insbesondere das Spritzgussverfahren, um eine Hüllform herzustellen.

In einer weiteren vorteilhaften Ausführungsform wird zumindest eine der Fügeflächen der beiden Hüllformen diamantiert, so dass die diamantierte Fügefläche eine glatte Oberfläche aufweist. Diamantieren bedeutet in diesem Zusammenhang, eine glatte Oberfläche beispielsweise mittels Diamant-Drehbearbeitungswerkzeugen herzustellen. Damit wird eine äußerst glatte Oberflächenstruktur erreicht, vergleichbar mit einer riefenfrei polierten Oberfläche. Mit dieser glatten Oberfläche kann eine klare, nicht sichtbare Fügenaht erzeugt werden.

Sofern hier der Begriff "glatt" verwendet wird, so bedeutet dies in diesem Zusammenhang, dass sich eine Rauhigkeit von weniger als R_{z} = 1 µm einstellt. Um die Fügenaht nach außen hin nicht in Erscheinung treten zu lassen, ist die Transparenz der Oberfläche jedoch mindestens genauso bedeutsam, wie deren glatte Beschaffenheit. So sollte die Oberfläche hochglänzend und nicht matt sein.

In einer weiteren vorteilhaften Ausführungsform wird zumindest eine der Fügeflächen der beiden Hüllformen so bearbeitet, dass eine hochglänzende, spiegelblanke, hochtransparente Oberfläche entsteht. Mit dieser Oberfläche kann eine Fügenaht entstehen, die keine Reflexionen von eventuell vorhandenen Rauigkeiten erzeugt und somit nicht sichtbar ist.

In einer weiteren vorteilhaften Ausführungsform kann eine der beiden Hüllformen einen zumindest abschnittsweise umlaufenden Rand aufweisen, wobei die andere Hüllform eine Erhebung aufweist. Die beiden Hüllformen können dann derart zusammengeführt werden, dass der Rand mit der Erhebung formschlüssig im Eingriff steht. Die erste Hüllform und die zweite Hüllform stehen somit formschlüssig und stabilisiert in Verbindung. Im anschließenden Fügevorgang bzw. während des Verschmelzens kann der Gegenstand besser in seiner ausgerichteten Position gehalten werden.

In einer weiteren beispielhaften Ausführungsform ist zumindest der Rand der ersten Hüllform oder zweiten Hüllform und/oder die Erhebung der ersten Hüllform oder zweiten Hüllform konisch ausgebildet. Damit kann eine Presspassung, bzw. ein Formschluss gebildet werden, der die beiden ersten und zweiten Hüllformen in der zusammengeführten Position verharren lässt und somit eine einfachere Handhabung der Hüllkörper und eine genauere Positionierung ermöglicht.

In einer weiteren vorteilhaften Ausführungsform weist der Rand der ersten oder zweiten Hüllform Öffnungen auf, um das Entweichen von Luft zu ermöglichen. Während des Pressvorgangs kann somit im Inneren der Hüllformen eingeschlossene Luft entweichen, so dass beim Verschmelzen sich keine Luftblasen bilden können und sich somit eine klare transparente Materialbeschaffenheit bilden kann.

In einer vorteilhaften Ausführungsform des Verfahrens werden während des Schritts des Verschmelzens die erste Hüllform und die zweite Hüllform derart erwärmt, dass sie einen teigigen Zustand einnehmen. Unter einem teigigen Zustand wird der meist zähflüssige Übergangsbereich zwischen festem und flüssigem Aggregatszustand eines Mediums verstanden. Mit dem erfindungsgemäßen Verfahren ist es nicht unbedingt erforderlich, einen Schmelzzustand zu schaffen, in dem die zu fügenden Massen einen flüssigen Zustand einnehmen müssen. Da der Führungsschacht sehr genau auf die Abmessungen der beiden Hüllformen abgestimmt ist, und das Material somit nicht entweichen beziehungsweise wegfließen kann, besteht die Möglichkeit unter Beaufschlagung von Druck und Temperatur einen teigigen Zustand zu schaffen, mit dem beide Hüllformen miteinander verschmolzen werden können.

In einer weiteren vorteilhaften Ausführungsform wird an der zweiten Hüllform ein Befestigungselement zum Befestigen an einem Halterelement ausgebildet. Das Halterelement kann dabei aus der Gruppe bestehend aus Füllfederhalter, Stifte, Uhren und Schmuck ausgewählt sein.

In einer vorteilhaften Ausführungsform des Verfahrens wird während des Verschmelzens eine Temperatur von 120° C bis 160° C, bevorzugt etwa 140° C gewählt. Die Temperatur sollte dabei für einen Zeitraum von 1 bis 5 Sekunden, bevorzugt 3 Sekunden aufrecht erhalten werden. Die Stößelelemente beaufschlagen die zufügenden Hüllformen dabei in einem Druckbereich von 180 bis 260 bar, bevorzugt etwa 230 bar. Der Druck wird während des Abkühlens bei etwa 90° C gehalten, bis das Material der Hüllformen einen Festzustand erreicht. Der Druck, der während des Fügevorgangs bis zum Erreichen der Verschmelztemperatur herrscht, kann 60 bis 80 bar, bevorzugt etwa 70 bar betragen. Bevorzugt wird für die Hüllformen Kunststoff, wie beispielsweise PMMA mit unterschiedlichen Zusammensetzungen, verwendet. Natürlich können bei unterschiedlichen Materialien andere Temperaturbereiche, Druckbereiche oder Zeitdauern vorteilhaft sein.

Es ist darauf hinzuweisen, dass auch eine erste Hüllform mit einer zweiten Hüllform, die aus einem ersten Hüllformabschnitt und einem zweiten Hüllformabschnitt bestehen soll, derart verschmolzen werden kann, dass alle drei Teile gleichzeitig verschmolzen werden.

Die Erfindung betrifft ferner einen Körper, der mit dem vorangehend genannten Verfahren hergestellt ist und an dem die vorangehend genannten vorteilhaften Merkmale ausgebildet sind.

### KURZE BESCHREIBUNG DER ZEICHNUNGEN

Weitere Merkmale, Vorteile und Anwendungsmöglichkeiten der Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1a bis 1e: zeigen den Vorgang der Herstellung eines Körpers.
- Fig. 2: zeigt eine Variante mit einem Klemmrand.

### DETAILLIERTE DARSTELLUNG EXEMPLARISCHER

### AUSFÜHRUNGSFORMEN

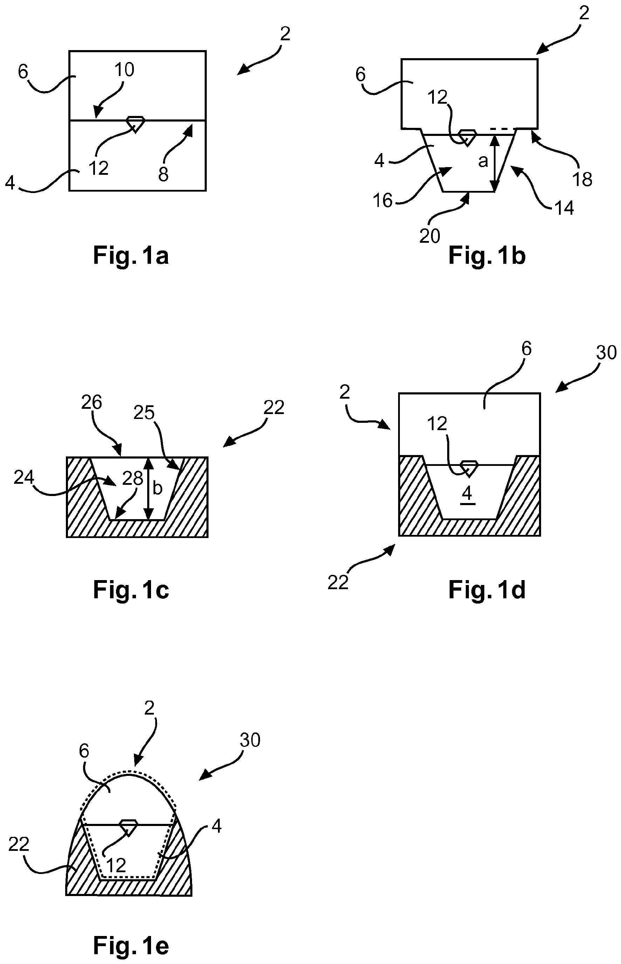

In Figur 1a wird eine Rohform der ersten Hüllform 2 dargestellt, die exemplarisch aus einem ersten Hüllformabschnitt 4 und einem zweiten Hüllformabschnitt 6 besteht, die eine erste Hüllformabschnittsfügefläche 8 und eine zweite Hüllformabschnittsfügefläche 10 aufweisen, welche unter Einschluss eines Gegenstands 12 miteinander verschmolzen sind. Ein derartiger Körper in Form der ersten Hüllform 2 wird etwa durch ein in EP 1 945 440 B1 erläutertes Verfahren. Die erste Hüllform 2 muss nicht zwangsläufig wie in Figur 1 ausgeführt werden. Das erfindungsgemäße Verfahren kann auch mit beliebigen anderen ersten Hüllformen durchgeführt werden, die einen Gegenstand einschließen.

Figur 1b stellt dar, wie die erste Hüllform 2 vorbereitet werden kann, um einen ansprechenden optischen Farb- bzw. Schattierungsverlauf herzustellen. Beispielhaft wird eine Seite der ersten Hüllform 2 mit einer materialabhebenden Bearbeitung zu einem kegelstumpfförmigen Vorsprung 14 umgeformt, wobei die Mantelfläche 16 des Kegelstumpfs als erste Fügefläche anzusehen ist. Um eine besonders gute Verbindbarkeit zu erreichen, kann die erste Fügefläche 16 poliert oder diamantiert sein. Die Höhe des Kegelstumpfs wird in Figur 1b mit "a" bezeichnet, was die Strecke zwischen einem radial vorstehenden Rand 18 und einer im Beispiel ebenen Endfläche 20 ist. Die derart vorbereitete erste Hüllform ist rotationssymmetrisch ausgestaltet.

Figur 1c zeigt eine zweite Hüllform 22, die nicht vollständig transparent ausgeführt ist. Bevorzugt kann die zweite Hüllform 22 vollständig durchgefärbt sein, etwa in schwarz. Zur Aufnahme der ersten Hüllform 2 wird eine Ausnehmung 24 mit einer Öffnungsfläche 26 und einer im Beispiel ebenen Bodenfläche 28 ausgeformt, dessen Form mit dem Vorsprung 14 korrespondierend ausgeformt ist. Die Ausnehmung hat demnach eine Innenfläche 25, die eine lineare, unveränderliche Steigung aber auch eine sich ändernde Steigung aufweisen kann. Die Höhe dieser Ausnehmung wird in Figur 1c mit "b" bezeichnet, wobei die Strecke "b" kleiner sein sollte als die Strecke "a" der ersten Hüllform 2. Dadurch kann vermieden werden, dass beim Zusammenfügen der ersten Hüllform und der zweiten Hüllform Luft eingeschlossen wird.

Figur 1d zeigt den resultierenden Körper 30, der aus der ersten Hüllform 2 und der zweiten Hüllform 22 besteht, die ineinander gesetzt werden. Unter Einwirkung von Druck und Temperatur verbinden sich die beiden Hüllformen und bilden einen integralen, fügenahtlosen Körper 30 aus.

Bei dem Beispiel der ersten Hüllform 2 mit dem eingeschlossenen Gegenstand 12 ist ersichtlich, dass die zweite Hüllform 22 den eingeschlossenen Gegenstand 12 vollständig umgibt. Die Höhe der Öffnungsfläche 26 des zweiten Hüllkörpers 22 entspricht der Höhe des eingeschlossenen Gegenstands 12 oder übersteigt diese leicht.

Zum Herstellen der endgültigen Form, die beispielsweise die Integration des Körpers 30 an einem Schreibgerät erlaubt, ist eine Bearbeitung dessen Außenfläche notwendig. Figur le zeigt etwa einen endbearbeiteten, konisch geformten Körper 30, der an einem hinteren Ende eines Stiftgehäuses oder einer Stiftkappe angeordnet sein kann. Beispielsweise könnte der Körper 30 aus der Figur 1d mithilfe einer Drehmaschine abgedreht und anschließend poliert bzw. diamantiert werden, um ein ansprechendes äußeres Gestaltungsbild herzustellen. Wird der Gegenstand 12 von oberhalb der ersten Hüllform 2 aus betrachtet, scheint er nun in einem Nebel zu stehen, der sich zur Spitze des eingeschlossenen Gegenstands 12 hin auflöst und sich nach unten bis zu der Bodenfläche 28 der Ausnehmung 24 hin verdichtet. Zusätzlich hierzu kann an der Unterseite des Körpers 30 ein Befestigungselement angeordnet oder ausgeformt werden, um den Körper befestigen zu können (nicht gezeigt).

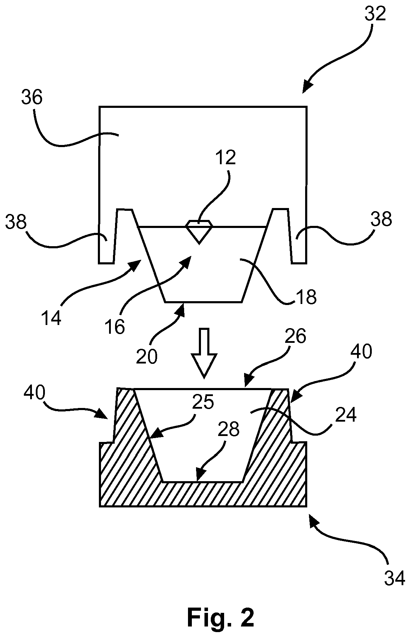

In Fig. 2 wird eine erste Hüllform 32 gezeigt, die einen ersten Hüllformabschnitt 4 wie in Fig. 1b und einen abgewandelten zweiten Hüllformabschnitt 36 aufweist, der mit einem verlängerten und sich über den ersten Hüllformabschnitt 4 erstreckenden Rand 38 ausgestattet ist. Dieser kann in eine entsprechende, randseitig angeordnete Ausnehmung 40 einer ersten Hüllform 34 eingebracht werden, um eine Zentrierung der beiden Hüllformen 32 und 34 zueinander zu erreichen. Um Lufteinschlüsse zu vermeiden, kann der Rand mit Ausnehmungen oder Öffnungen versehen sein, die ein Austreten von Luft ermöglichen.

Ergänzend sei darauf hinzuweisen, dass "aufweisend" keine anderen Elemente oder Schritte ausschließt und "ein" oder "einer" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Verfahren zum Herstellen eines teilweise transparenten Körpers (30) mit einem Farbverlauf, mit den folgenden Schritten:
- Bereitstellen einer transparenten ersten Hüllform (2, 32) mit einer ersten Fügefläche (16) an einem Vorsprung (14) und einem fest eingeschlossenen dreidimensionalen Gegenstand (12),
- Bereitstellen einer zweiten, nicht vollständig transparenten Hüllform (22, 34) mit einer zweiten Fügefläche (25) in einer Ausnehmung (24), wobei die Form des Vorsprungs (14) und die Form der Ausnehmung (24) miteinander korrespondieren,
- Zusammenführen der ersten Hüllform (2, 32) und der zweiten Hüllform (22, 34) durch Einbringen des Vorsprungs in die Ausnehmung, und
- Verschmelzen der ersten Fügefläche der ersten Hüllform (2, 32) mit der zweiten Fügefläche (25) der zweiten Hüllform (22, 34), indem die erste Fügefläche (16) und die zweite Fügefläche (25) mit einer Druckkraft und einer Temperatur beaufschlagt werden, so dass die erste Hüllform (2, 32) an der ersten Fügefläche (16) in die zweite Hüllform (22, 34) an der zweiten Fügefläche (25) frei von einer sichtbaren Fügenaht übergeht,
wobei durch unterschiedliche Transparenzgrade und das Verschmelzen der ersten Hüllform (2, 32) in der zweiten Hüllform (22, 34) ein nahtloser Übergang von der ersten Hüllform (2, 32) zu der zweiten Hüllform (22, 34) entsteht, so dass abhängig von einer gewählten Form der Ausnehmung (24) der Farbverlauf erreicht wird.

2. Verfahren nach Anspruch 1, ferner aufweisend den Schritt des Bildens eines Vakuums vor dem Verschmelzen, so dass zwischen der ersten Hüllform (2, 32) und der zweiten Hüllform (22, 34) ein Lufteinschluss verhindert wird.

3. Verfahren nach Anspruch 1 oder 2,
wobei die erste Hüllform (2, 32) und die zweite Hüllform (22, 34) in einem Führungsschacht angeordnet werden.

4. Verfahren nach Anspruch 3,
wobei zumindest ein Stößelelement in den Führungsschacht einfährt, um somit mittels des Einfahrens eine Druckkraft auf die erste Hüllform (2, 32) und/oder die zweite Hüllform (22, 34) aufzubringen.

5. Verfahren nach Anspruch 4,
wobei das Stößelelement die Druckkraft parallel zu einer Wandfläche des Führungsschachts verfahren wird.

6. Verfahren nach einem der vorhergehenden Ansprüche,
wobei die Ausnehmung (24) von einer Öffnungsfläche (26) zu einer Bodenfläche (28) hin verjüngend ausgestaltet wird.

7. Verfahren nach einem der Ansprüche 1 bis 5,
wobei die Innenfläche (25) der Ausnehmung (24) eine sich monoton oder streng monoton in eine Richtung sich ändernde Steigung aufweist.

8. Verfahren nach einem der vorhergehenden Ansprüche,
wobei die Ausnehmung (24) eine ebene Bodenfläche (28) aufweist.

9. Verfahren nach einem der vorhergehenden Ansprüche,
wobei die erste Hüllform (2, 32) durch einen ersten Hüllformabschnitt (4) mit einer ersten Hüllformabschnittsfügefläche (8) und einen zweiten Hüllformabschnitt (6, 36) mit einer zweiten Hüllformabschnittsfügefläche (10) ausgebildet wird, ferner aufweisend die Schritte:
- Ausrichten eines Gegenstands (12) auf bzw. im Bereich der ersten Hüllformabschnittsfügefläche (8),
- Zusammenführen des ersten Hüllformabschnitts (4) und des zweiten Hüllformabschnitts (6, 36), so dass der Gegenstand (12) zwischen der ersten Hüllformabschnittsfügefläche (8) und der zweiten Hüllformabschnittsfügefläche (10) verharrt oder temporär festgeklemmt wird,
- Verschmelzen der ersten Hüllformabschnittsfügefläche (8) mit der zweiten Hüllformabschnittsfügefläche (10), indem die Hüllformabschnittsfügeflächen (8, 10) mit einer Druckkraft und einer Temperatur beaufschlagt werden, so dass der erste Hüllformabschnitt (4) an der ersten Hüllformabschnittsfügefläche (8) in den zweiten Hüllformabschnitt (6, 36) an der zweiten Hüllformabschnittsfügefläche (10) frei von einer sichtbaren Fügenaht übergeht.

10. Verfahren nach einem der vorhergehenden Ansprüche,
wobei der eingeschlossene Gegenstand (12) derart in der ersten Hüllform (2, 32) positioniert wird oder die zweite Hüllform (22, 34) derart dimensioniert wird, dass der Gegenstand (12) vollständig von der zweiten Hüllform (22, 34) umschlossen wird.

11. Verfahren nach einem der vorhergehenden Ansprüche,
wobei die zweite Hüllform (22, 34) vollständig untransparent gestaltet ist.

12. Verfahren nach einem der vorhergehenden Ansprüche, ferner aufweisend den Schritt des Abtragens von Material von der Außenfläche des Körpers (30) abgetragen, um eine nahtlose Oberfläche herzustellen.

13. Körper (30) mit einem fest eingeschlossenen dreidimensionalen Gegenstand (12), aufweisend:
eine erste transparente Hüllform (2, 32) mit einer ersten Fügefläche (16) und einem eingeschlossenen Gegenstand (12),
eine zweite, nicht vollständig transparente Hüllform (22, 34) mit einer zweiten Fügefläche (25),
wobei die erste Fügefläche (16) auf einem Vorsprung (14) und die zweite Fügefläche (25) in einer Ausnehmung (24) ausgebildet ist,
wobei die erste Fügefläche (16) der ersten Hüllform (2, 32) und die zweite Fügefläche (25) der zweiten Hüllform (22, 34) derart zusammengefügt sind, dass ein Bereich zwischen den Hüllformen (2, 22, 32, 34) frei von einer sichtbaren Fügenaht ist, **dadurch gekennzeichnet, dass** durch unterschiedliche Transparenzgrade und ein Verschmelzen der ersten Hüllform (2, 32) in der zweiten Hüllform (22, 34) ein nahtloser Übergang von der ersten Hüllform (2, 32) zu der zweiten Hüllform (22, 34) vorliegt, so dass abhängig von einer gewählten Form der Ausnehmung (24) der Farbverlauf erreicht ist.

14. Körper (30) nach Anspruch 13, ferner aufweisend ein Befestigungselement zum Befestigen an einem Halterelement,
wobei das Halterelement aus der Gruppe bestehend aus Füllfederhalter, Stift, Uhr und Schmuck ausgewählt ist.

15. Körper (30) nach einem der Ansprüche 13 oder 14,
wobei der Körper (30) gemäß dem Verfahren nach einem der Ansprüche 1 bis 12 hergestellt ist.

## Claims

1. A method of manufacturing a partially transparent body (30) having a color gradient comprising the steps of:
- providing a transparent first envelope shape (2, 32) having a first joining surface (16) on a projection (14) and a fixedly enclosed three-dimensional article (12),
- providing a second, non-transparent envelope shape (22, 34) having a second joining surface (25) in a recess (24), the shape of the projection (14) and the shape of the recess (24) corresponding to each other,
- bringing together the first envelope shape (2, 32) and the second envelope shape (22, 34) by introducing the projection into the recess; and
- merging the first joining surface of the first envelope shape (2, 32) with the second joining surface (25) of the second envelope shape (22, 34) by applying a pressure force and a temperature to the first joining surface (16) and the second joining surface (25), so that the first envelope shape (2, 32) merges at the first joining surface (16) into the second envelope shape (22, 34) at the second joining surface (25) free of a visible joining seam,
wherein a seamless transition from the first envelope shape (2, 32) to the second envelope shape (22, 34) is produced by different degrees of transparency and the merging of the first envelope shape (2, 32) in the second envelope shape (22, 34), so that the colour gradient is achieved as a function of a selected shape of the recess (24).

2. Method according to claim 1 further comprising the step of forming a vacuum prior to merging so as to prevent air entrapment between the first shell shape (2, 32) and the second shell shape (22, 34).

3. Method according to claim 1 or 2,
wherein the first shell shape (2, 32) and the second shell shape (22, 34) are disposed in a guide shaft.

4. Method according to claim 3,
at least one pusher element being driven into the guide shaft in order to thus apply a compressive force to the first envelope shape (2, 32) and/or the second envelope shape (22, 34) by means of the drive-in.

5. Method according to claim 4,
wherein the pusher element moves the compressive force parallel to a wall surface of the guide shaft.

6. Method according to one of the preceding claims,
wherein the recess (24) is tapered from an opening surface (26) towards a bottom surface (28).

7. Method according to any of Claims 1 to 5,
wherein the inner surface (25) of the recess (24) has a monotonously or strictly monotonously varying pitch in one direction.

8. Method according to one of the preceding claims,
the recess (24) having a flat bottom surface (28).

9. Method according to one of the preceding claims,
wherein the first envelope shape (2, 32) is formed by a first envelope shape portion (4) having a first envelope shape portion joining surface (8) and a second envelope shape portion (6, 36) having a second envelope shape portion joining surface (10), further comprising the steps of:
- aligning of an object (12) on or in the region of the first envelope shape portion joining surface (8),
- bringing the first envelope shape portion (4) and the second envelope shape portion (6, 36) together so that the article (12) is fixed or temporarily clamped between the first envelope shape portion joining surface (8) and the second envelope shape portion joining surface (10),
- merging of the first envelope mould section joining surface (8) with the second envelope mould section joining surface (10) by applying a compressive force and a temperature to the envelope shape section joining surfaces (8, 10), so that the first envelope shape section (4) at the first envelope shape section joining surface (8) merges into the second envelope shape section (6, 36) at the second envelope shape section joining surface (10) free of a visible joint seam.

10. Method according to one of the preceding claims,
wherein the enclosed article (12) is positioned in the first envelope shape (2, 32) or the second envelope shape (22, 34) is dimensioned such that the article (12) is completely enclosed by the second envelope shape (22, 34).

11. Method according to one of the preceding claims,
the second envelope shape (22, 34) being completely non-transparent.

12. Method according to one of the preceding claims, further comprising the step of ablating material from the outer surface of the body (30) to produce a seamless surface.

13. A body (30) comprising a fixedly enclosed three-dimensional object (12):
a first transparent envelope shape (2, 32) having a first joining surface (16) and an enclosed article (12),
a second, not completely transparent envelope shape (22, 34) having a second joining surface (25),
wherein the first joining surface (16) is formed on a projection (14) and the second joining surface (25) is formed in a recess (24),
wherein the first joining surface (16) of the first envelope shape (2, 32) and the second joining surface (25) of the second envelope shape (22, 34) are joined together such that an area between the envelope forms (2, 22, 32, 34) is free of a visible joining seam, **characterized in that**,
a seamless transition from the first envelope shape (2, 32) to the second envelope shape (22, 34) is present by different degrees of transparency and a merging of the first envelope shape (2, 32) in the second envelope shape (22, 34), so that the colour gradient is achieved as a function of a selected shape of the recess (24).

14. Body (30) according to claim 13 further comprising an attachment member for attachment to a support member,
wherein the support element is selected from the group consisting of fountain pen, pen, watch and jewelry.

15. Body (30) according to one of the claims 13 or 14,
wherein the body (30) is prepared according to the method of any one of Claims 1 to 12.

## Revendications

1. Procédé de fabrication d'un corps partiellement transparent (30) ayant un gradient de couleur comprenant les étapes consistant à:
- fournir une première forme d'enveloppe transparente (2, 32) ayant une première surface de jonction (16) sur une saillie (14) et un article tridimensionnel (12) fermé de manière fixe,
- fournir une seconde forme d'enveloppe non transparente (22, 34) ayant une seconde surface de jonction (25) dans un évidement (24), la forme de la saillie (14) et la forme de l'évidement (24) correspondant entre elles,
- réunir la première forme d'enveloppe (2, 32) et la deuxième forme d'enveloppe (22, 34) en introduisant la projection dans l'évidement; et
- fondre de la première surface de jonction de la première forme d'enveloppe (2, 32) avec la deuxième surface de jonction (25) de la deuxième forme d'enveloppe (22, 34) en appliquant une force de pression et une température sur la première surface de jonction (16) et la deuxième surface de jonction (25), de sorte que la première forme d'enveloppe (2, 32) se fond à la première surface de jonction (16) dans la deuxième forme d'enveloppe (22, 34) à la deuxième surface de jonction (25) sans joint visible,
dans laquelle une transition sans soudure de la première forme d'enveloppe (2, 32) à la seconde forme d'enveloppe (22, 34) est produite par différents degrés de transparence et la fusion de la première forme d'enveloppe (2, 32) dans la seconde forme d'enveloppe (22, 34), de sorte que le gradient de couleur est réalisé en fonction d'une forme sélectionnée de l'évidement (24).

2. Procédé selon la revendication 1 comprenant en outre l'étape consistant à former un vide avant la fusion de manière à empêcher l'emprisonnement d'air entre la première forme d'enveloppe (2, 32) et la seconde forme d'enveloppe (22, 34).

3. Procédé selon la revendication 1 ou 2,
dans laquelle la première forme d'enveloppe (2, 32) et la seconde forme d'enveloppe (22, 34) sont disposés dans un arbre de guidage.

4. Procédé selon la revendication 3,
au moins un élément poussoir est enfoncé dans l'arbre de guidage afin d'appliquer ainsi une force de compression au la première forme d'enveloppe (2, 32) et/ou au la seconde forme d'enveloppe (22, 34) au moyen de l'enfoncement.

5. Procédé selon la revendication 4,
dans laquelle le élément poussoir déplace la force de compression parallèlement à une surface de paroi de l'arbre de guidage.

6. Procédé selon l'une des revendications précédentes,
dans laquelle l'évidement (24) est effilé depuis une surface d'ouverture (26) vers une surface de fond (28).

7. Procédé selon l'une quelconque des revendications 1 à 5,
dans laquelle la surface intérieure (25) de l'évidement (24) a un pas variant de façon monotone ou strictement monotone dans une direction.

8. Procédé selon l'une des revendications précédentes,
l'évidement (24) ayant une surface de fond plate (28).

9. Procédé selon l'une des revendications précédentes,
dans laquelle la première forme d'enveloppe (2, 32) est formé par une première partie de forme d'enveloppe (4) ayant une première partie de forme d'enveloppe ayant une surface de jonction (8) et une seconde partie de forme d'enveloppe (6, 36) ayant une seconde surface de jonction (10), comprenant en outre les étapes de :
- aligner un objet (12) sur ou dans la région de la première surface de jonction (8) de la section d'enveloppe,
- réunir la première partie de formation d'enveloppe (4) et la deuxième partie de formation d'enveloppe (6, 36) de sorte que l'article (12) est fixé ou temporairement serré entre la première partie de formation d'enveloppe surface de jonction (8) et la deuxième partie de formation d'enveloppe surface de jonction (10),
- fondre de la première surface de jonction (8) de la première section de forme d'enveloppe avec la seconde surface de jonction (10) de la section de forme d'enveloppe en appliquant une force de compression et une température aux surfaces de jonction (8, 10) de la section de forme d'enveloppe, de sorte que la première section (4) de forme d'enveloppe sur la première surface de jonction (8) de la section de forme d'enveloppe se fond dans la seconde section (6, 36) du forme d'enveloppe, sur la seconde surface (10) de jonction de la section (10) du forme d'enveloppe sans joint visible de joint.

10. Procédé selon l'une des revendications précédentes,
dans laquelle l'article joint (12) est positionné dans la première forme d'enveloppe (2, 32) ou la seconde forme d'enveloppe (22, 34) est dimensionné de telle sorte que l'article (12) est complètement fermé par la seconde forme d'enveloppe (22, 34).

11. Procédé selon l'une des revendications précédentes,
la seconde forme d'enveloppe (22, 34) étant totalement opaque.

12. Procédé selon l'une des revendications précédentes, comprenant en outre l'étape consistant à enlever un matériau de la surface externe du corps (30) pour produire une surface sans soudure.

13. Corps (30) comprenant un objet tridimensionnel (12) fermé de manière fixe :
une première forme d'enveloppe transparente (2, 32) ayant une première surface de jonction (16) et un article fermé (12),
une seconde forme d'enveloppe (22, 34) qui n'est pas complètement transparente et qui présente une seconde surface de jonction (25),
dans laquelle la première surface de jonction (16) est formée sur une saillie (14) et la seconde surface de jonction (25) est formée dans un évidement (24),
dans laquelle la première surface de jonction (16) de la première forme d'enveloppe (2, 32) et la seconde surface de jonction (25) de la seconde forme d'enveloppe (22, 34) sont jointes ensemble de telle sorte qu'une zone entre les formes d'enveloppe (2, 22, 32, 34) est libre d'un joint visible, **caractérisé en ce que**,
une transition sans soudure de la première forme d'enveloppe (2, 32) à la seconde forme d'enveloppe (22, 34) est présente par différents degrés de transparence et une fusion de la première forme d'enveloppe (2, 32) dans la seconde forme d'enveloppe (22, 34), de sorte que le gradient de couleur est réalisé en fonction d'une forme choisie de l'évidement (24).

14. Corps (30) selon la revendication 13 comprenant en outre un élément de fixation pour fixation à un élément de support,
dans laquelle l'élément de support est choisi dans le groupe constitué par un stylo-plume, un stylo, une montre et un bijou.

15. (30) après l'une des revendications 13 ou 14,
dans laquelle le corps (30) est préparé selon le procédé de l'une quelconque des revendications 1 à 12.
